# FASCICULE DE BREVET EUROPEEN

(11) **EP 2 001 206 B1**
(45) Date de publication et mention de la délivrance du brevet: **17.05.2017**
(21) Numéro de dépôt: 08157470.9
(22) Date de dépôt: 03.06.2008
(51) Int. Cl.: H04M 1/02, H04M 1/04

(54) **SOCLE RÉGLABLE POUR APPAREIL, EN PARTICULIER POUR COMBINÉ TÉLÉPHONIQUE**
REGULIERBARE BASIS FÜR GERÄT, INSBESONDERE FÜR TELEFONHÖRER
ADJUSTABLE CRADLE FOR A DEVICE, IN PARTICULAR FOR A TELEPHONE HANDSET

(30) Priorité: 05.06.2007 FR 0755471
(43) Date de publication de la demande: 10.12.2008
(73) Titulaire: Hager Security, 38920 Crolles (FR)
(72) Inventeur: Buiret, Jean-Luc, 38400, SAINT MARTIN D'HERES (FR)
(74) Mandataire: Nuss, Laurent

(56) Documents cités:
- EP-A- 0 668 684
- DE-A1- 3 518 226
- DE-B- 1 220 897
- FR-A- 2 807 257
- US-A- 5 816 733
- US-A1- 2006 166 722
- US-A1- 2007 002 533

## Description

La présente invention concerne un socle pour un appareil, en particulier pour un combiné téléphonique.

On connaît, de façon courante, soit des socles qui se posent sur une surface horizontale, soit des socles qui se fixent contre une surface verticale, chaque socle présentant des moyens de réception et de maintien du combiné qui sont spécifiquement adaptés à sa destination.

On connaît aussi des socles comprenant une embase et un support en appui par une interface et susceptibles de pivoter l'un par rapport à l'autre pour que leurs faces opposées prennent des inclinaisons différentes l'une par rapport à l'autre. De tels socles sont décrits dans les documents FR-A-2 807 257, DE-A-35 18 226, EP-A-0 668 684 ou DE-B-12 20 897.

Le but de la présente invention est de proposer un socle pour un appareil, en particulier un combiné téléphonique, adapté pour ne pas être spécialement destiné à un seul usage.

Le socle selon l'invention, destiné à recevoir un appareil, en particulier un combiné téléphonique, peut comprendre une embase présentant une surface arrière d'appui destinée à prendre appui sur une surface de réception et au moins une surface avant et un support présentant au moins une surface arrière en contact avec ladite surface avant de l'embase et des moyens avant longitudinaux de réception de l'appareil ; l'embase et le support présentant des moyens complémentaires d'accouplement et d'articulation permettant de faire pivoter le support par rapport à l'embase, selon un axe non perpendiculaire à la face arrière de l'embase, de telle sorte qu'entre deux positions extrêmes, lesdits moyens avant de réception de l'appareil présentent deux inclinaisons différentes par rapport à la face arrière de l'embase ; lesdits moyens de réception du support comprenant une gouttière de réception frontale de l'appareil, délimitée à une extrémité par une butée d'appui du pied du combiné ;

Selon l'invention, le socle peut comprendre un plastron amovible, ce plastron et le support comprenant des moyens complémentaires d'accouplement tels qu'en position accouplée, le plastron et la gouttière délimitent un puits de réception de la partie de l'appareil adjacente à son pied.

Selon l'invention, ledit plastron peut se présenter sous la forme d'un U venant contre les bords du support adjacents à ladite gouttière et à ladite butée et présente une bretelle passant sur le fond et les côtés de la gouttière et joignant les parties d'extrémité des branches de ce U.

Selon l'invention, lesdites positions extrêmes sont de préférence diamétralement opposées, lesdits moyens avant longitudinaux de réception de l'appareil étant orientés selon la pente définie par l'inclinaison de l'axe desdits moyens complémentaires d'articulation par rapport à la face arrière de l'embase.

Selon l'invention, l'embase et le support présentent de préférence des moyens complémentaires d'arrêt auxdites positions extrêmes.

Selon l'invention, l'embase et le support présentent des moyens de maintien auxdites positions extrêmes.

Selon l'invention, l'angle desdits moyens de réception par rapport à ladite surface arrière du support est sensiblement égal à l'angle de ladite face arrière d'appui et de ladite surface avant de l'embase.

Selon l'invention, ladite surface arrière du support et ladite surface avant de l'embase, venant l'une sur l'autre, sont de préférence plates, les moyens complémentaires d'accouplement et d'articulation étant de préférence tels que ces surfaces glissent l'une sur l'autre lors de la rotation du support par rapport à l'embase.

Selon une variante de l'invention, lesdits moyens complémentaires d'accouplement et d'articulation peuvent comprendre des parties cylindriques engagées l'une dans l'autre, l'une de ces parties cylindriques présentant des lames munies de dents d'accrochage en arrière de l'autre partie cylindrique.

La présente invention sera mieux comprise à l'étude d'un socle pour un appareil portable, en particulier un combiné téléphonique, décrit à titre d'exemple non limitatif et illustré par le dessin sur lequel :
- La figure 1 représente une vue latérale du socle avec le combiné, en position « bureau » ;
- La figure 2 représente une vue longitudinale en coupe du socle avec le combiné, en position « bureau » ;
- La figure 3 représente une vue latérale du socle avec le combiné, en position « murale » ;
- La figure 4 représente une vue longitudinale en coupe du socle avec le combiné, en position « murale » ;
- La figure 5 représente une vue de l'avant du socle avec le combiné, en position « bureau » ;
- La figure 6 représente une vue de l'avant du socle avec le combiné, en position « murale » ;
- La figure 7 représente une vue frontale du socle sans le combiné, en position « bureau » ;
- La figure 8 représente une vue frontale du socle sans le combiné, en position « murale » ;
- La figure 9 représente une vue arrière du socle sans le combiné, en position « bureau » ;
- La figure 10 représente une coupe partielle agrandie d'un détail du socle ;
- La figure 11 représente une coupe à plat du socle ;
- Et la figure 12 représente en perspective un plastron.

Le socle 1 représenté sur les figures est destiné à recevoir un appareil constitué par un combiné téléphonique 2 qui, dans l'exemple, est de forme allongée et de section sensiblement rectangulaire avec des coins arrondis et des arêtes arrondies de jonction de ses faces.

Le socle 1 comprend une embase 3 sensiblement en forme de cuvette, qui comprend une paroi arrière 4 qui présente une surface arrière plate d'appui 5, sensiblement rectangulaire, destinée à prendre appui sur une surface de réception extérieure, et qui comprend des parois longitudinales 6, sensiblement trapézoïdales, et des parois transversales 7, sensiblement rectangulaires, les bords avant des parois longitudinales 6 et des parois transversales 7 déterminant une surface avant 8 plate inclinée par rapport à la surface arrière 5,

Le socle 1 comprend un support creux 9 qui comprend une demi-coquille 10 sensiblement en forme de cuvette. Cette demi-coquille 10 comprend une paroi arrière 11 qui présente une surface arrière 12, sensiblement rectangulaire, en appui sur la surface avant 8 de l'embase 3, et qui comprend des parois longitudinales 13 et des parois transversales 14.

La paroi arrière 4 de l'embase 3 porte, sensiblement en son milieu, une partie cylindrique avant 15 perpendiculaire à la surface avant 8.

La paroi arrière 11 du support 9 porte, sensiblement en son milieu, une partie cylindrique arrière 16 perpendiculaire à la surface arrière 12 et engagée dans la partie cylindrique 15 de l'embase 3. La partie cylindrique arrière 16 est composée de lames axiales 17.

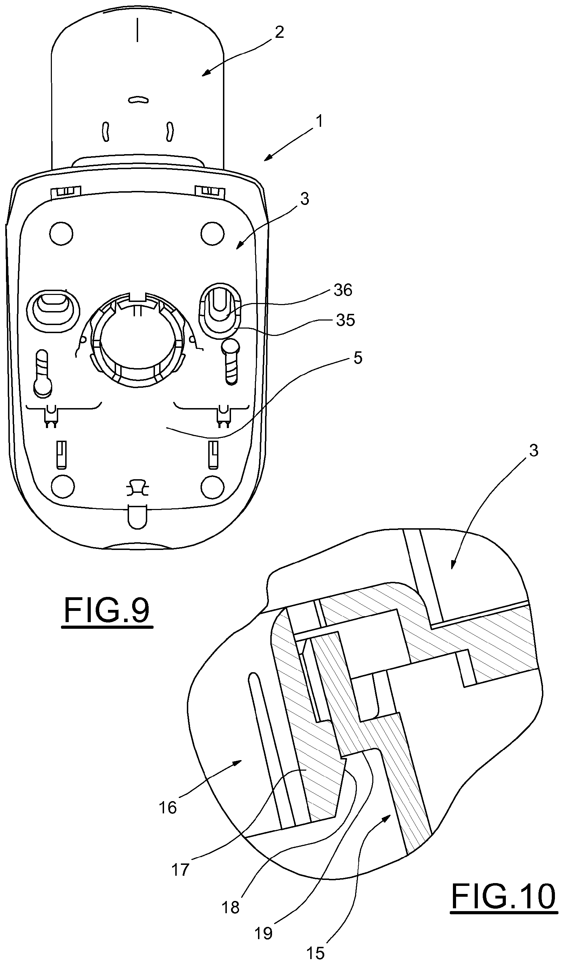

Comme le montre la figure 10, les lames axiales 17 portent des ergots extérieurs d'accouplement 18 venant par encliquetage en arrière d'un épaulement intérieur d'accouplement 19 de la partie cylindrique 15.

Ainsi, le support 9 et l'embase 3 sont accouplés et peuvent pivoter selon l'axe des parties cylindriques 15 et 16, en glissant l'un sur l'autre par leurs surfaces 8 et 12 en contact, cet axe n'étant pas perpendiculaire à la face arrière 5 de l'embase 3. On notera que la surface 12 est plus grande que la surface 8 et dépasse tout autour de cette dernière.

Le support creux 9 comprend un couvercle avant 20 dont le bord périphérique est accouplé aux bords des parois périphériques 13 et 14 de la demi-coquille 10 par tous moyens d'encliquetage connus, par exemple par des paires d'épaulements encliquetés 10a et 20a répartis sur leurs périphéries. La forme de la partie avant de ce couvercle 20 détermine une gouttière avant ou frontale de réception 21, s'étendant longitudinalement, limitée par une paroi transversale du couvercle déterminant une butée 22.

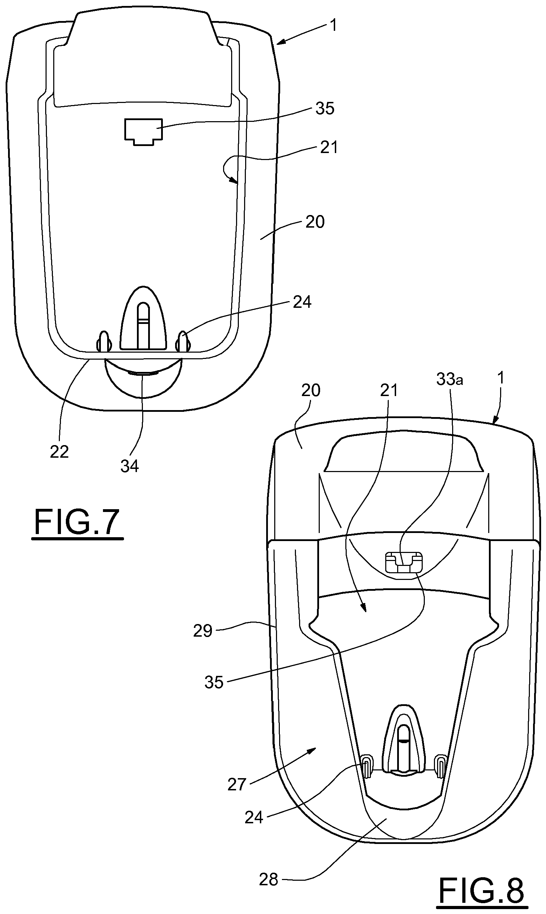

La forme de cette gouttière 21 est adaptée pour recevoir, frontalement et longitudinalement, le combiné téléphonique 2, le pied 23 de ce combiné 2 venant en appui contre la butée 22. Selon l'exemple, comme le montre la figure 7, la butée 22 présente des dents 24 en saillie longitudinale s'engageant dans le pied 22 Lorsque le combiné téléphonique 2 est accouplé au support 9, sa partie de tête 23a dépasse latéralement de ce support.

Les formes et dimensions de la demi-coquille 10 et du couvercle 20 constituant le support 9 sont telles que la direction longitudinale de la gouttière 21 est inclinée par rapport à sa surface arrière 12, de telle sorte que ses parois longitudinales 13 sont trapézoïdales, la butée 23 étant du côté de la paroi transversale 14 la plus courte. Ainsi, lorsqu'il est placé dans la gouttière 21, le combiné téléphonique 2 est incliné par rapport à la surface arrière 12 du support 9.

Avantageusement, l'angle d'inclinaison de la surface avant 8 par rapport à la surface arrière 5 de l'embase 3 est sensiblement égal à l'angle d'inclinaison de la gouttière 21 par rapport à la surface arrière 12 du support 9.

Il résulte de ce qui précède qu'un utilisateur peut faire pivoter le support 9 par rapport à l'embase 3 de façon à faire varier l'inclinaison du combiné téléphonique 2 par rapport à la surface arrière d'appui 5.

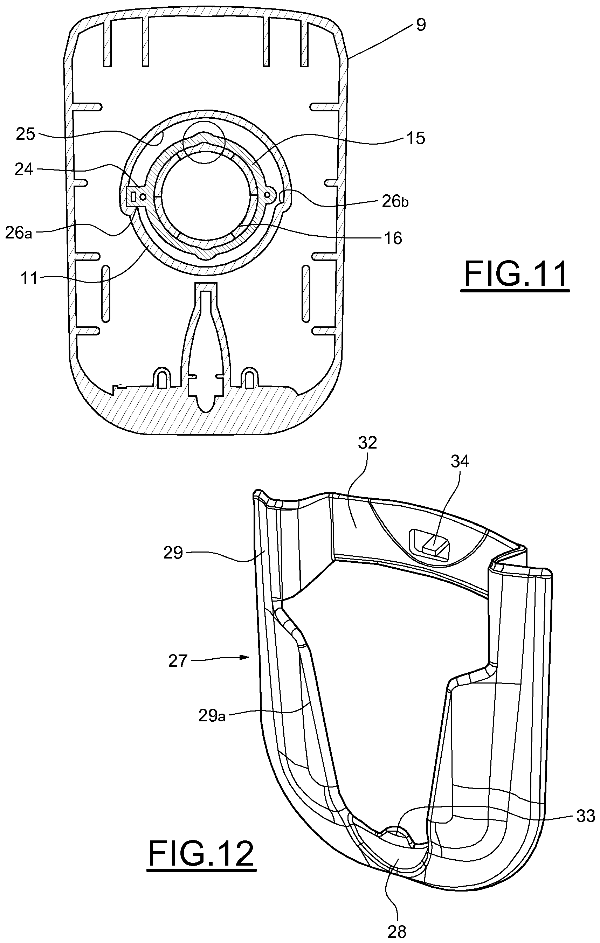

Plus particulièrement, comme le montre la figure 11, la partie cylindrique 15 de l'embase 3 présente un ergot 24 à sa périphérie, susceptible de circuler dans une rainure 25 de la paroi arrière 11 du support 9 ménagée au pied de la partie cylindrique 16. Cette rainure 24 présente des extrémités 26a et 26b formant de butées de fin de course pour l'ergot 24, telles que le support 9 peut être pivoté par rapport à l'embase 3 entre deux positions extrêmes diamétralement opposées telles que définies ci-dessous.

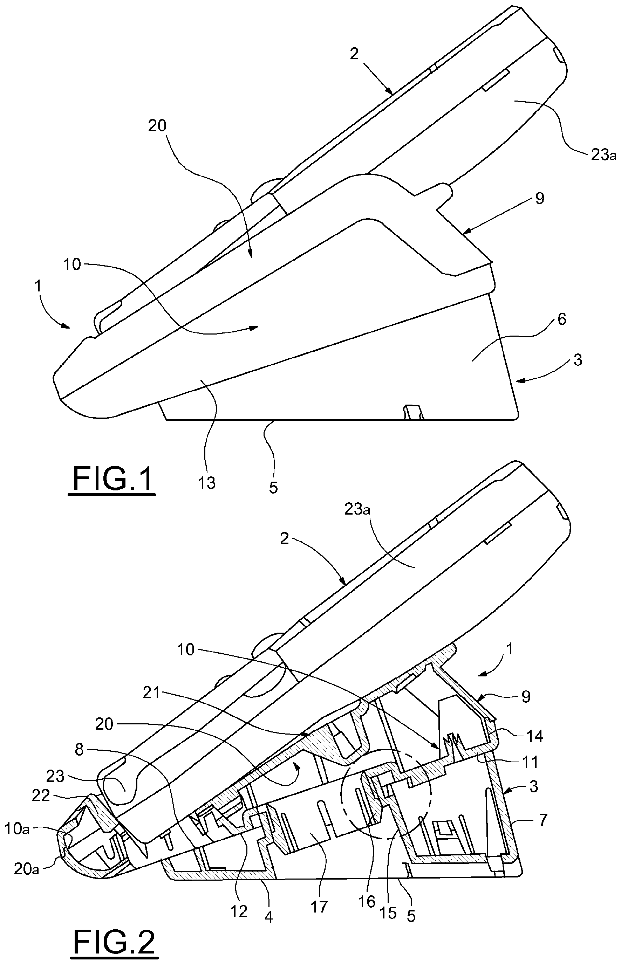

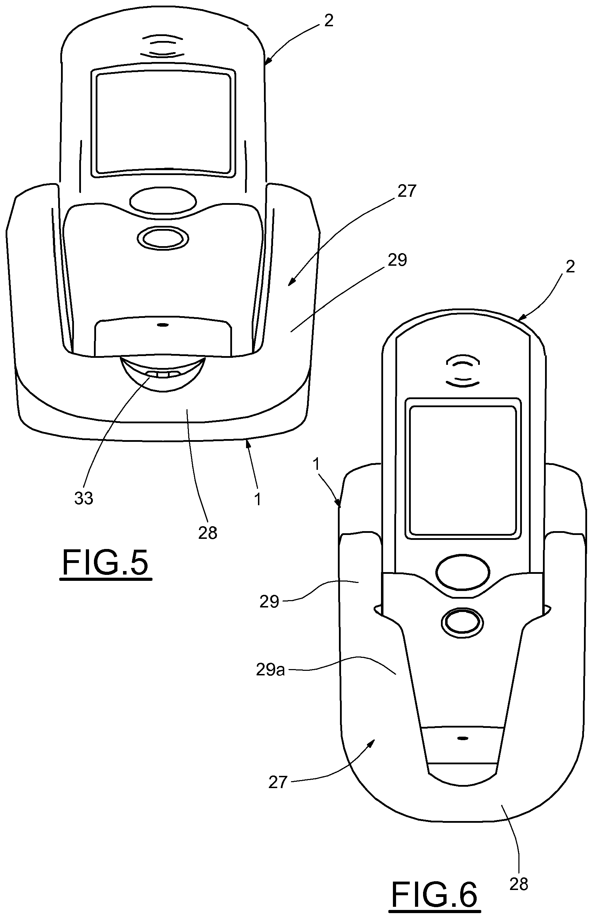

Dans une première position extrême, dite position de « bureau », visible sur les figures 1, 2 et 5, la gouttière 21 est inclinée par rapport à la surface arrière d'appui 5 et son angle d'inclinaison est sensiblement égal à l'addition de l'angle d'inclinaison précité de l'embase 3 et de l'angle d'inclinaison précité du support 9, la butée 23 de la gouttière étant rapprochée de la surface arrière d'appui 5.

Avantageusement, dans cette première position extrême, le socle 1 peut être posé sur une surface horizontale, de telle sorte que le combiné téléphonique 2 peut être posé dans la gouttière 21 en l'engageant frontalement et placé de façon inclinée, et qu'il peut en être extrait frontalement en étant saisi par sa partie de tête.

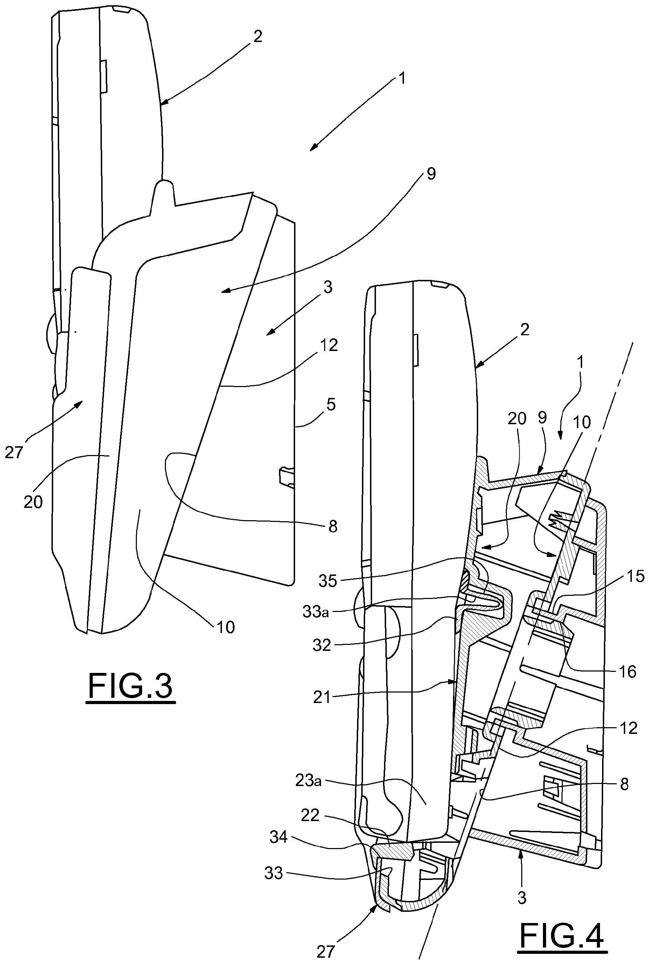

Dans une seconde position extrême, dite position « murale », visible sur les figures 3, 4 et 6, la gouttière 21 s'étend sensiblement parallèlement à la surface arrière d'appui 5, les angles d'inclinaison précités s'annulant.

Avantageusement, dans cette seconde position extrême, le socle 1 peut être installé contre une surface verticale, par exemple contre un mur, la gouttière 21 s'étendant sensiblement verticalement et la butée 23 étant en bas.

Dans cette seconde position, il convient d'équiper le socle 1 d'un plastron amovible 27 rapporté, adapté pour empêcher le combiné téléphonique 2, placé dans la gouttière 21, de basculer vers l'avant.

Comme le montrent les figures 3, 4, 6, 8 et 12, ce plastron 27 se présente sous la forme d'un U presque à plat, dont la branche centrale 28 vient recouvrir, en épousant sa forme, la surface frontale du couvercle 20 adjacente à sa butée 23 et dont les branches 29 viennent recouvrir, en épousant leur forme, les surfaces frontales du couvercle 20 adjacentes aux bords longitudinaux de la gouttière 21, sans atteindre l'extrémité ouverte de cette gouttière. Ces branches 29 présentent des rebords 29a venant en face du fond de la gouttière 21 pour déterminer un puits de réception par engagement vertical de la partie de pied 23 du combiné téléphonique 2.

Le plastron amovible 27 comprend en outre une bretelle transversale 32, encastrée dans la gouttière 21. Cette bretelle 32 relie les parties d'extrémité de ses branches 29, prend appui sur le fond et les côtés de la gouttière 21 et passe en arrière du combiné téléphonique 2 placé dans la gouttière 21 et engagé verticalement dans le puits.

A titre d'exemple montré sur les figures 4 et 12, pour son maintien de façon amovible, la branche centrale 28 du plastron amovible 27 présente un ergot longitudinale 33 s'engageant dans un trou 34 du couvercle 20 et la bretelle transversale 32 porte un doigt flexible arrière 33a de verrouillage / déverrouillage s'engageant dans un trou adapté 35 du couvercle 20.

Comme le montre la figure 9, la paroi arrière de l'embase 3 et la paroi arrière de la demi-coquille 10 présentent des trous correspondants 35 et 36 pour le passage de vis de fixation du socle 2 contre une paroi de réception, qui de surcroît maintiennent le support 9 sur l'embase 3.

Par ailleurs, l'embase 3 et le support 9 pourraient présenter des moyens complémentaires élastiques d'indexation et de maintien auxdites positions extrêmes.

La présente invention ne se limite pas à l'exemple ci-dessus décrit. Des variantes de réalisation sont possibles sans sortir du cadre défini par les revendications annexées.

## Revendications

1. Socle destiné à recevoir un appareil, en particulier un combiné téléphonique, comprenant une embase (3) présentant une surface arrière d'appui (5) destinée à prendre appui sur une surface de réception et au moins une surface avant (8) et un support (9) présentant au moins une surface arrière (12) en contact avec ladite surface avant de l'embase et des moyens avant longitudinaux (21) de réception de l'appareil (2) ; l'embase et le support présentant des moyens complémentaires d'accouplement et d'articulation (15, 16) permettant de faire pivoter le support par rapport à l'embase, selon un axe non perpendiculaire à la face arrière de l'embase, de telle sorte qu'entre deux positions extrêmes, lesdits moyens avant de réception de l'appareil présentent deux inclinaisons différentes par rapport à la face arrière de l'embase ; lesdits moyens de réception du support comprenant une gouttière (21) de réception frontale de l'appareil, délimitée à une extrémité par une butée d'appui (22) du pied du combiné ;_**caractérisé par le fait qu'**il comprend un plastron amovible (27), ce plastron et le support (9) comprenant des moyens complémentaires d'accouplement tels qu'en position accouplée, le plastron et la gouttière délimitent un puits de réception de la partie de l'appareil adjacente à son pied.

2. Socle selon la revendication 1, **caractérisé par le fait que** ledit plastron se présente sous la forme d'un U venant contre les bords du support adjacents à ladite gouttière et à ladite butée et présente une bretelle passant sur le fond et les côtés de la gouttière et joignant les parties d'extrémité des branches de ce U.

3. Socle selon l'une des revendications 1 et 2, **caractérisé par le fait que** lesdites positions extrêmes sont diamétralement opposées, lesdits moyens avant longitudinaux (21) de réception de l'appareil étant orientés selon la pente définie par l'inclinaison de l'axe desdits moyens complémentaires d'articulation par rapport à la face arrière de l'embase.

4. Socle selon l'une quelconque des revendications précédentes, **caractérisé par le fait que** l'embase (3) et le support (9) présentent des moyens complémentaires d'arrêt (24; 26a, 26b) auxdites positions extrêmes.

5. Socle selon l'une quelconque des revendications précédentes, **caractérisé par le fait que** l'embase (3) et le support (9) présentent des moyens de maintien (35, 36) auxdites positions extrêmes.

6. Socle selon l'une quelconque des revendications précédentes, **caractérisé par le fait que** l'angle desdits moyens de réception (21) par rapport à ladite surface arrière du support est sensiblement égal à l'angle de ladite face arrière d'appui et de ladite surface avant de l'embase.

7. Socle selon l'une quelconque des revendications précédentes, **caractérisé par le fait que** ladite surface arrière du support et ladite surface avant de l'embase, venant l'une sur l'autre, sont plates, les moyens complémentaires d'accouplement et d'articulation (15, 16) étant tels que ces surfaces glissent l'une sur l'autre lors de la rotation du support par rapport à l'embase.

8. Socle selon l'une quelconque des revendications précédentes, **caractérisé par le fait que** lesdits moyens complémentaires d'accouplement et d'articulation comprennent des parties cylindriques (15, 16) engagées l'une dans l'autre, l'une de ces parties cylindriques présentant des lames munies de dents d'accrochage en arrière de l'autre partie cylindrique.

## Patentansprüche

1. Basis, die dazu bestimmt ist, ein Gerät, insbesondere einen Telefonhörer, aufzunehmen, umfassend einen Sockel (3), der eine hintere Auflagefläche (5), die dazu bestimmt ist, auf einer Aufnahmefläche aufzuliegen, und mindestens eine vorderen Fläche (8) aufweist, und eine Stütze (9), die mindestens eine hintere Fläche (12), die mit der vorderen Fläche der Basis in Kontakt ist, und längliche vordere Mittel (21) für die Aufnahme des Geräts (2) aufweist; wobei der Sockel und die Stütze komplementäre Kopplungs- und Gelenkmittel (15, 16) aufweisen, die es ermöglichen, die Stütze in Bezug zum Sockel entlang einer bezogen auf die Rückseite des Sockels nicht senkrecht verlaufender Achse zu schwenken, so dass zwischen zwei äußersten Positionen die vorderen Aufnahmemittel des Geräts zwei unterschiedliche Neigungen in Bezug zur Rückseite des Sockels aufweisen; wobei die Aufnahmemittel der Stütze eine Frontaufnahmerinne (21) für das Gerät umfassen, die an einem Ende durch einen Anschlag (22) zur Auflage des Fußes des Telefonhörers begrenzt ist;
**dadurch gekennzeichnet, dass**
er eine abnehmbare Abdeckung (27) umfasst, wobei diese Abdeckung und die Stütze (9) komplementäre Kopplungsmittel umfassen, so dass in der gekoppelten Position die Abdeckung und die Rinne einen Aufnahmeschacht für den an seinen Fuß angrenzenden Teil des Geräts begrenzen.

2. Basis nach Anspruch 1,
**dadurch gekennzeichnet, dass**
die Abdeckung in Form eines U vorhanden ist, das sich an die Ränder der Stütze anlegt, die an die Rinne und den Anschlag angrenzen, und einen Träger aufweist, der am Boden und an den Seiten der Rinne verläuft und die Endteile der Schenkel dieses U verbindet.

3. Basis nach einem der Ansprüche 1 und 2,
**dadurch gekennzeichnet, dass**
die äußersten Positionen diametral gegenüberliegend sind, wobei die länglichen vorderen Mittel (21) für die Aufnahme des Geräts entlang des Gefälles ausgerichtet sind, das durch die Neigung der Achse der komplementären Gelenkmittel in Bezug zur Rückseite des Sockels definiert ist.

4. Basis nach einem der vorhergehenden Ansprüche,
**dadurch gekennzeichnet, dass**
der Sockel (3) und die Stütze (9) komplementäre Haltemittel (24; 26a, 26b) an den äußersten Positionen aufweisen.

5. Basis nach einem der vorhergehenden Ansprüche,
**dadurch gekennzeichnet, dass**
der Sockel (3) und die Stütze (9) Haltemittel (35, 36) an den äußersten Positionen aufweisen.

6. Basis nach einem der vorhergehenden Ansprüche,
**dadurch gekennzeichnet, dass**
der Winkel der Aufnahmemittel (21) in Bezug zur hinteren Fläche der Stütze im Wesentlichen gleich dem Winkel der hinteren Auflagefläche und der vorderen Fläche des Sockels ist.

7. Basis nach einem der vorhergehenden Ansprüche,
**dadurch gekennzeichnet, dass**
die hintere Fläche der Stütze und die vordere Fläche des Sockels, wenn sie aufeinander liegen, flach sind, wobei die komplementären Kopplungs- und Gelenkmittel (15, 16) derart sind, dass diese Flächen bei der Drehung der Stütze in Bezug zum Sockel aufeinander gleiten.

8. Basis nach einem der vorhergehenden Ansprüche,
**dadurch gekennzeichnet, dass**
die komplementären Kopplungs- und Gelenkmittel zylindrische Teile (15, 16) umfassen, die ineinander eingreifen, wobei einer dieser zylindrischen Teile Lamellen aufweist, die mit Zähnen zur Befestigung hinten am anderen zylindrischen Teil versehen sind.

## Claims

1. Cradle designed to hold a device, in particular a telephone handset, comprising a base (3) heaving a rear support surface (5) designed to rest on a receiving surface and at least one front surface (8) and a support (9) having at least one rear surface (12) in contact with said front surface of the base and front longitudinal means (21) for receiving the device (2), the base and the support having additional coupling and articulation means (15, 16) making it possible to pivot the support relative to the base, according to an axis which is not perpendicular to the rear surface of the base, such that between two extreme positions, said front receiving means of the device have two different inclinations relative to the rear surface of the base; said receiving means of the support comprising a front receiving channel (21) of the device which is delimited at one end by a bearing stop (22) of the foot of the handset, **characterised by** the fact that it comprises a removable faceplate (27), said faceplate and the support (9) comprising additional coupling means such that in a coupled position, the faceplate and the channel delimit a receiving body for the part of the device adjacent to its foot.

2. Cradle according to claim 1, **characterised by** the fact that said faceplate is in the form of a U bearing against the edges of the support adjacent to said channel and said stop and has a ramp passing over the base and the sides of the channel and joining the end parts of the sides of said U.

3. Cradle according to any one of claims 1 and 2, **characterised by** the fact that said end positions are diametrically opposite one another, said front longitudinal means (21) for receiving the device being oriented according to the slope defined by the inclination of the axis of said additional articulation means relative to the rear face of the base.

4. Cradle according to any one of the preceding claims, **characterised by** the fact that the base (3) and the support (9) have additional stopping means (24; 26a, 26b) to said end positions.

5. Cradle according to any one of the preceding claims, **characterised by** the fact that the base (3) and the support (9) have support means (35, 36) at said end positions.

6. Cradle according to any one of the preceding claims, **characterised by** the fact that the angle of said receiving means (21) relative to said rear surface of the support is substantially equal to the angle of said rear bearing surface and said front surface of the base.

7. Cradle according to any one of the preceding claims, **characterised by** the fact that said rear surface of the support and said front surface of the base, bearing on top of one another, are flat, the additional coupling and articulation means (15, 16) being such that the surfaces slide on one another during the rotation of the support relative to the base.

8. Cradle according to any one of the preceding claims, **characterised by** the fact that said additional coupling and articulation means comprise cylindrical parts (15, 16) connected to one another, one of said cylindrical parts having strips provided with teeth connecting behind the other cylindrical part.
